# EUROPEAN PATENT APPLICATION

(11) **EP 4 707 251 A1**
(43) Date of publication of application: **11.03.2026**
(21) Application number: 25217195.4
(22) Date of filing: 26.08.2022
(51) Int. Cl.: C02F 1/469, B01D 61/48, B01D 61/46, B01D 61/54, C02F 1/461, C02F 103/08

(54) **CASCADING, RECIRCULATING WATER DEIONIZATION SYSTEMS**

(30) Priority: 26.08.2021 US 202117412998
(62) Divisional of application: 22862138.9
(71) Applicant: Robert Bosch GmbH, 70442 Stuttgart (DE)
(72) Inventor: CHRISTENSEN, Jake, Elk Grove, California, 95758 (US); PANDE, Vikram, San Jose, California, 95134 (US); BESLI, Münir M., San Jose, California, 95134 (US); KUPPAN, Saravanan, San Jose, California, 95118 (US); HELLSTROM, Sondra, Palo Alto, California, 94303 (US)
(74) Representative: Isarpatent

(57) **Abstract**

Water deionization systems based on electrochemical water desalination or softening using a capacitive or intercalative deionization devices including a stack of electrochemical cells. Each cell includes first and second electrodes and an ion exchange membrane. Each cell includes inlet and outlet channels with control valves that control the separation of the source water into brine (e.g., concentration) and clean water (e.g., purification) streams. The deionization device or module may include multiple electrochemical cells connected electrically in series, parallel or a combination of both. The cells may also be in serial, parallel, or combined fluid communication. The output water of one or more streams from each cell or collection of cells may be recirculated and combined with one or more input water streams to improve the electrochemical energy efficiency of the cells. The electrochemical cells at different rows may have varying electrode thickness, area and loading of the active material.

## Description

### CROSS-REFERENCE TO RELATED APPLICATIONS

This application claims priority to U.S. application Serial No. 17/412,998 filed August 26, 2021, the disclosure of which is hereby incorporated in its entirety by reference herein.

### TECHNICAL FIELD

The present disclosure relates to cascading and/or recirculating water deionization systems.

### BACKGROUND

The demand for fresh, potable water for human consumption, agriculture, industry, and other uses continues to increase while natural sources of high-quality water are becoming increasingly limited. Removing salt and other impurities from seawater and/or industrial water, which is referred to as a desalination process, is one important technology to secure fresh water, in addition to the tradition thermal (e.g., drying process) and mechanical (e.g., reverse osmosis) processes.

### SUMMARY

According to one embodiment, a system for removing ions from a solution is disclosed. The system includes a first deionization cell including first and second compartments divided by a first anion exchange membrane. The first and second compartments include first and second electrodes, respectively. The first compartment is configured to admit a first inlet stream of the solution and provide a first outlet stream of the solution. The second compartment is configured to admit a second inlet stream of the solution and provide a second outlet stream of the solution. The first and second electrodes are configured to receive an electric bias of current or voltage through a circuit such that the first and second electrodes store and release ions from the solution. The system further includes a second deionization cell including first and second compartments divided by a second anion exchange membrane. The first and second compartments include first and second electrodes, respectively. The first compartment is configured to admit the first outlet stream of the solution and provide a third outlet stream of the solution. The second compartment is configured to admit the second outlet of solution and provide a fourth outlet stream of the solution. The first and second electrodes are configured to receive an electric bias of current or voltage through the circuit such that the first and second electrodes store and release ions from the solution. The first and second electrodes of the first deionization cell have a first cell area configured to contact the solution and the first and second electrodes of the second deionization cell have a second cell area configured to contact the solution and greater than the first cell area.

In a second embodiment, a system for removing ions from a solution is disclosed. The system includes a first deionization cell group having a first number of deionization cells. The first deionization cell group is configured to admit first and second inlet streams of the solution and to provide first and second outlet streams of the solution. The system further includes a second deionization cell group having a second number of deionization cells. The second deionization cell group is configured to admit the first and second outlet streams of the solution and to provide third and fourth outlet streams of the solution. The second number of deionization cells is greater than the first number of deionization cells.

In a third embodiment, a system for removing ions from a solution is disclosed. The system includes a first deionization cell including first and second compartments divided by a first anion exchange membrane. The first and second compartments include first and second electrodes, respectively. The first compartment is configured to admit a first inlet stream of the solution and provide a first outlet stream of the solution. The second compartment is configured to admit a second inlet stream of the solution and provide a second outlet stream of the solution. The first and second electrodes are configured to receive an electric bias of current or voltage through a circuit such that the first and second electrodes store and release ions from the solution. The first deionization cell includes a first recirculation loop being configured to direct at least a portion of the first outlet stream into the first inlet stream.

### BRIEF DESCRIPTION OF THE DRAWINGS

Figure 1 depicts a schematic diagram of a capacitive deionization (CDI) system.
Figures 2A and 2B depict a schematic diagram of an intercalative desalination (IDI) system.
Figure 3 depicts a schematic diagram of an example of a hybrid electrochemical desalination system.
Figure 4A depicts a side view of deionization system having cascading cell units.
Figure 4B depicts a top view of the deionization system shown in Figure 4A.
Figure 5 depicts a schematic diagram of a deionization system having cascading cell groups.
Figure 6 depicts a schematic diagram of a deionization cell having a recirculation loop.
Figure 7 depicts a schematic diagram of a deionization system having first and second deionization cells with independent first and second recirculation loops, respectively.
Figure 8 depicts a schematic diagram of a deionization system having first and second deionization cells with first and second recirculation loops, respectively, combining with input streams of second and first deionization cells, respectively.
Figure 9 depicts a schematic diagram of a cascading deionization system having rows of cascading deionization cells configured for independent recirculation.
Figure 10 depicts a schematic diagram of a deionization system having rows of cascading deionization cells configured for interdependent recirculation.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the invention. Practice within the numerical limits stated is generally preferred. Also, unless expressly stated to the contrary: percent, "parts of," and ratio values are by weight; the description of a group or class of materials as suitable or preferred for a given purpose in connection with the invention implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. These terms may be used to modify any numeric value disclosed or claimed herein. Generally, the term "about" denoting a certain value is intended to denote a range within ± 5% of the value. As one example, the phrase "about 100" denotes a range of 100 ± 5, i.e., the range from 95 to 105. Generally, when the term "about" is used, it can be expected that similar results or effects according to the invention can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1 to 10 explicitly includes 1, 2, 3, 4, 5, 6, 7, 8, 9, and 10. Similarly, the range 1 to 100 includes 1, 2, 3, 4, .... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (e.g., pressure, pH, flow rates, etc.) can be practiced with plus or minus 50 percent of the values indicated rounded to or truncated to two significant figures of the value provided in the examples. In a refinement, concentrations, temperature, and reaction conditions (e.g., pressure, pH, flow rates, etc.) can be practiced with plus or minus 30 percent of the values indicated rounded to or truncated to two significant figures of the value provided in the examples. In another refinement, concentrations, temperature, and reaction conditions (e.g., pressure, pH, flow rates, etc.) can be practiced with plus or minus 10 percent of the values indicated rounded to or truncated to two significant figures of the value provided in the examples.

For all compounds expressed as an empirical chemical formula with a plurality of letters and numeric subscripts (e.g., CH₂O), values of the subscripts can be plus or minus 50 percent of the values indicated rounded to or truncated to two significant figures. For example, if CH₂O is indicated, a compound of formula C_{(0.8-1.2)}H_{(1.6-2.4)}O_{(0.8-1.2)}. In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

It is also to be understood that this invention is not limited to the specific embodiments and methods described below, as specific components and/or conditions may, of course, vary. Furthermore, the terminology used herein is used only for the purpose of describing particular embodiments of the present invention and is not intended to be limiting in any way.

The term "comprising" is synonymous with "including," "having," "containing," or "characterized by." These terms are inclusive and open-ended and do not exclude additional, unrecited elements or method steps.

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Desalination may be performed by a capacitive deionization (CDI) system. The CDI system applies an electrical energy to an electrochemical cell to separate the charges of ions. A CDI system contains two electrodes, where anion and cations can be stored at the surface of each of the electrodes via adsorption and/or double layer formation.

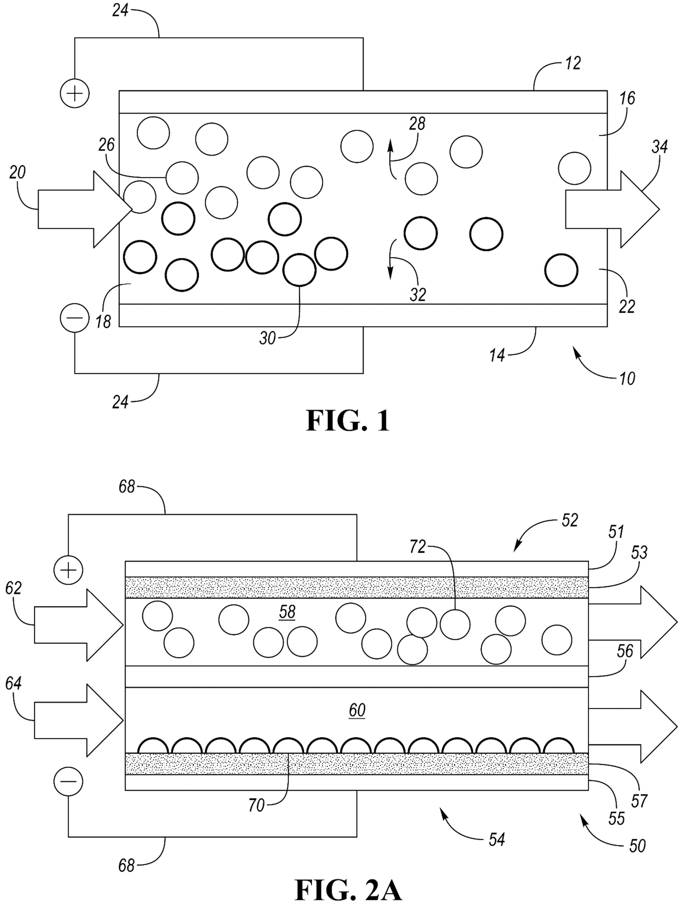

Figure 1 depicts a schematic diagram of capacitive deionization (CDI) system 10. CDI system 10 includes first carbon-based electrode 12, second carbon-based electrode 14, and compartment 16 extending therebetween. First and/or second carbon-based electrodes 12 and 14 may be formed of active carbon, mesoporous carbon, hierarchically porous carbon, carbon nanotubes, graphene, carbon aerogel, and combinations thereof. Compartment 16 includes inlet 18 configured to admit a saline solution, as depicted by arrow 20. The saline solution may be brackish water or seawater. Force is applied to the saline solution so that it flows from inlet 18 to outlet 22 through compartment 16. The force may be applied by a pump or gravity or other high-pressure source.

As shown in Figure 1, a power source through circuit 24 applies a current to generate a potential between first carbon-based electrode 12 and second carbon-based electrode 14 such that first carbon-based electrode 12 has a positive charge and second carbon-based electrode 14 has a negative charge. As the saline solution flows through compartment 16, anions 26 (e.g., Cl⁻) are attracted to and adsorbed on first carbon-based electrode 12 as depicted by arrow 28 and cations 30 (e.g., Na⁺) are attracted to and adsorbed on second carbon-based electrode 14 as depicted by arrow 32. First and/or second carbon-based electrodes 12 and 14 may have a high-surface area to maximize the number of ions that are adsorbed. The surface area of the electrode may be any of the following values or in a range of any two of the following values: 400, 450, 500, 550, 600, 650, 700, 750, 800, 850, 900, 950, 1,000, 1,050 and 1,110 m²/g. By the time that the saline solution exits from outlet 22, the salinity of the solution is greatly reduced such that a fresh solution exits outlet 22 as depicted by arrow 34. The fresh solution may be a desalinated freshwater solution created from brackish water. Upon a polarity switch to circuit 24, adsorbed ion species are released back into the stream of the salinity solution, thereby creating a highly concentrated brine solution.

A second desalination alternative is an intercalative deionization (IDI) system. An IDI system includes two cation-intercalating electrodes configured to alternatively absorb and release cations from or to two separate water streams or reservoirs. Often the two electrodes are symmetric (e.g., same active material and electrode composition, porosity, thickness, etc.). An ion exchange membrane, typically an anion exchange membrane (AEM), is placed between these two electrodes and separates two different saltwater compartments, one of which is purified (ions removed) and the other concentrated (ions added).

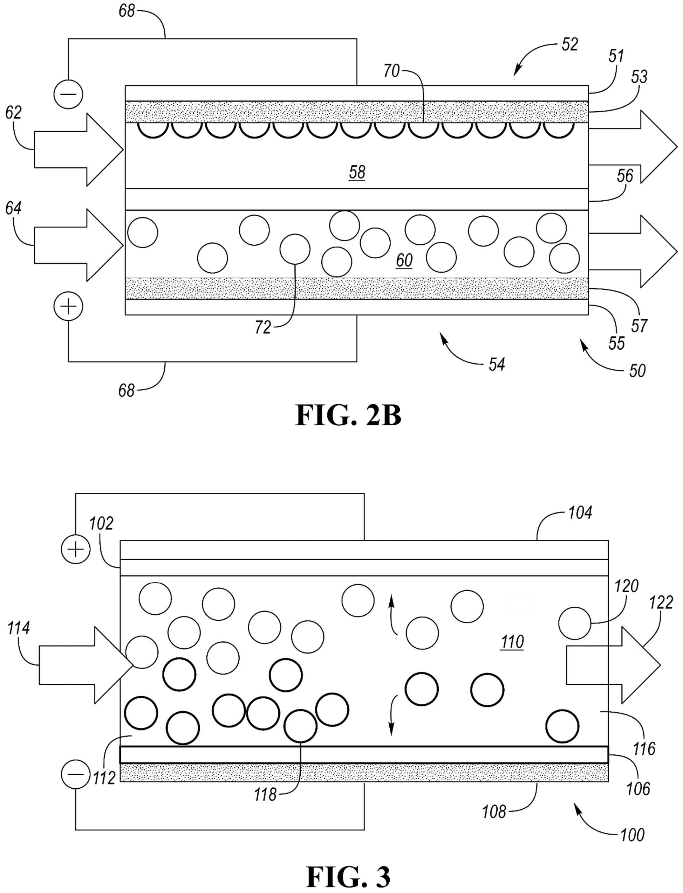

Figures 2A and 2B depict a schematic diagram of IDI system 50. An IDI system includes first and second intercalation electrodes. First and second composite layers 53 and 57 may operate in a substantially filled state or a substantially empty state. In the substantially filled state, the intercalation host is substantially filled with cations (e.g., Na⁺). In the substantially empty state, the intercalation host is substantially empty of cations. In one or more embodiments, first and second composition layers 53 and 57 may be partially filled at an initial state. For example, first and/or second composition layers 53 and/or 57 may be at a 50% state of charge (e.g., 50% of the capacity is filled with cations).

First and second intercalation electrodes 52 and 54 are separated by anion exchange membrane 56. As a bias (e.g., voltage or current) is applied to the first and second intercalation electrodes, cations from the substantially filled side are extracted (e.g., deintercalated) to create a brine solution stream, while cations in the adjacent compartment including the substantially empty electrode are removed from the feed solution by intercalating into the substantially empty electrode. Due to the electric field imparted by the bias, anions are simultaneously transported across the anion exchange membrane (AEM) from the purification stream into the brine solution stream.

First intercalation electrode 52 includes first substrate 51 and first composite layer 53 (including a first intercalation host) is applied to first substrate 51. Second intercalation electrode 54 includes second substrate 55 and second composite layer 57 (including a second intercalation host) applied to second substrate 55. A water-permeable separator (not shown) may be used to prevent electrical contact between the first and second intercalation electrodes 52 and 54.

First compartment 58 is formed between first intercalation electrode 52 and anion exchange membrane 56. Second compartment 60 is formed between second intercalation electrode 54 and anion exchange membrane 56. As depicted by arrow 62, a first saline solution is fed into first compartment 58. As depicted by arrow 64, a second saline solution is fed into second compartment 60. The first and/or second saline solutions may be brackish water (e.g., for the removal of any and all ions) and/or hard water (for the removal of CaCO₃, MgCO₃, and other salts with divalent cations).

First and second intercalation electrodes 52 and 54 each have a state of charge (SOC) that changes continuously during operation. For example, first intercalation electrode 52 may start at 100% SOC and second intercalation electrode 54 at 0% SOC. As system 50 is operated, the SOC of first intercalation electrode 52 drops from 100% to 0% while the SOC of second intercalation electrode 54 rises from 0% to 100%. At the end of this "half cycle," the current (or voltage) is flipped and the cell runs in reverse, while being coordinated with the switching of valves, at least at the final outlets of system 50, such that the waste (brine) and purified streams continue to be provided as needed in system 50.

Figure 2A depicts a first half-cycle operation of IDI system 50 and Figure 2B depicts a second half-cycle operation of IDI system 50. At the beginning of the first half-cycle operation, first intercalation electrode 52 is substantially empty and second intercalation electrode 54 is substantially full. During the first half-cycle operation, a power source through circuit 68 applies a current to generate an electric potential between first intercalation electrode 52 and second intercalation electrode 54 such that first intercalation electrode 52 has a positive charge and second intercalation electrode 54 has a negative charge. Figure 2A shows a state in which cations 70 were released from first intercalation electrode 52 into first compartment 58, while cations 70 in second compartment 60 were intercalated into second intercalation electrode 54. During each half-cycle operation, anions 72 cross anion exchange membrane 56 to recombine with cations 70 released from one of first and second intercalation electrodes 52 and 54. IDI system 50 is configured to supply a continuous stream of freshwater. When a saline solution (e.g., brackish water) is flowed through IDI system 50 and a current is applied by a power source through circuit 68, Na⁺, Ca²⁺ and/or Mg²⁺ ions are intercalated into first or second composition layers 53 or 57, and anions (e.g., Cl⁻ and CO₃²⁻) are accumulated in the opposite first or second compartment 58 or 60 by transporting through anion exchange membrane 56. The cations are also accumulated in electrical balance with the anions. The outlet solution from one of first or second compartment 58 or 60 is desalinated or softened (e.g., contains a lower concentration of Na⁺, Ca²⁺ and/or Mg²⁺) while the other of first and second compartment 58 and 60 is enriched in salinity and is considered a wastewater stream.

Desalination may also be performed using a hybrid capacitive deionization (HCDI) system. The HCDI system uses a cation intercalation host electrodes and incorporates an anion exchange membrane (AEM) for water desalination and cleaning. The HCDI electrochemical device has one cation intercalation host electrode coupled with a carbon-based electrode (e.g., porous carbon, activated carbon, etc.) on the other side.

Figure 3 depicts a schematic diagram of hybrid capacitive deionization (HCDI) system 100. HCDI system 100 includes anion exchange membrane 102 in a layer-to-layer configuration with carbon-based electrode 104. Anion exchange membrane 102 may contact carbon-based electrode 104. Hybrid electrochemical desalination system 100 includes cation exchange membrane 106 in a layer-to-layer configuration with intercalation host 108. Cation exchange membrane 106 may contact intercalation host 108. Compartment 110 is formed between spaced apart anion exchange membrane 102 and cation exchange membrane 106. Hybrid electrochemical desalination system 100 may be configured to desalinate and/or soften a saline solution based on a combination of ion intercalation and electro-adsorption.

Compartment 110 includes inlet 112 configured to admit a saline solution, as depicted by arrow 114. The saline solution may be brackish water or seawater. Force is applied to the saline solution so that it flows from inlet 112 to outlet 116 through compartment 110, as depicted by arrow 122. Cations 118 within the feed saline solution stream are removed through intercalation, while anions 120 are adsorbed on carbon-based electrode 104. Anion exchange membrane 102 is configured to increase efficiency by decreasing co-ion adsorption (e.g., co-ion adsorption on carbon-based electrode 104). The saline solution is only desalinated during one half-cycle due to the non-symmetric nature of hybrid electrochemical desalination system 100.

In one or more embodiments, one or more types of the deionization systems identified above may be incorporated in a cascade arrangement and/or with a recirculation system to create beneficial deionization systems. The deionization systems of one or more embodiments may improve electrochemical energy efficiency and/or mitigate detrimental parasitic reactions at the electrodes that can limit the lifetime of a deionization system.

Applications for these deionization systems may include water desalination (e.g., converting brackish water to purified water for drinking, agriculture, industrial applications, power generation, electrolysis, etc.) and/or water softening (targeted removal of "hard" ions such as calcium and magnesium) for improved durability of pipes and appliances that use water (e.g., dishwashers).

In a deionization system (e.g., a deionization module or a cell stack having a series of cells), two water streams flow sequentially through a series of cells, with the salt concentration of one stream decreasing within a given cell and from cell to cell (e.g., continuously decreasing) and the salt concentration of the second stream increasing (e.g., continuously increasing) as a current is simultaneously passed through the series of cells or a cell stack. All cells in the deionization system may have identical designs characteristics (e.g., area and/or electrode capacity). A deionization system having identical design characteristics may provide suboptimal performance. For instance, cell resistance typically increases as the salt concentration approaches zero due to a drop in conductivity of the cells. The cell resistance may also increase as the salt concentration increases to a point where solution viscosity increases. Assuming no mitigation by a supporting electrolyte that is not removed from solution via an applied current, the downstream resistance may tend to be higher than the upstream resistance because one stream is increasing in concentration while the other is approaching zero concentration of salt. The resistance increase may be exacerbated by concentration gradients present along the direction of the current (e.g., from the membrane to either of the electrodes), which may be the result of local concentrations that are even higher or lower than the corresponding average concentration at a particular location in the flow channel.

Increasing cell resistance may lower energy efficiency and/or create a higher rate of heat generation for a given applied current, or rate of salt removal. This can be alleviated by making the cell larger in area (thereby decreasing the current density while increasing the size of the device) and/or increasing the flow rate through the cell, thereby increasing the convective mixing, and reducing concentration gradients in the cell. A deionization system having uniformly increased size cells may be suboptimal because the cells may result in excess capacity and cost.

In one or more embodiments, a deionization system may include one or more upstream moderate-concentration, low-resistance cells having a smaller area than one or more downstream extreme-concentration, high-resistance cells. Deionization systems of these embodiments may use relatively less material and/or have a relatively smaller module size compared to a uniform cell device with similar performance. For instance, in a bipolar stack of one or more embodiments, an upstream cell has an area A₀ and a downstream cell has an area A₁ > A₀. When a particular current, I, is passed through the deionization device, upstream cell has a current density (I / A₀) greater than the downstream cell current density of I / A₁. By utilizing a deionization device having a downstream cell with an A₁ greater than an area A₀ of an upstream cell, a cell-to-cell efficiency can be maintained despite the electrolyte in the downstream cell having poorer transport properties by virtue of a higher resistivity.

**In** one or more embodiments, the upstream cell and the downstream cell may have identical capacity. In such an arrangement, a downstream increase in area may provide a downstream decrease in area-specific loading of active electrode material (e.g., thinner electrodes), which helps to decrease polarization of the electrolyte in the downstream cell.

**In** another embodiment, a downstream cell may have a higher loading of active material to compensate for a possible higher rate of capacity fade due to scaling. Such downstream cells may initially have excess capacity, which is reduced through due to scaling. In one embodiment, a first downstream cell has a higher area and lower loading than the first upstream cell, and intermediate cells follow the same trend, while the last downstream cell (or more than one downstream cell) has a higher area and higher loading than upstream cells because the last one or more downstream cells may experience the most extreme salt concentrations (e.g., a relatively higher concentration of salts creates a higher tendency for scaling of the electrodes and the membrane).

**In** another embodiment, the composition of electrodes between upstream and downstream cells may vary. For instance, a more durable but more expensive intercalation material may be used in one or more downstream cells. As another example, the electrodes of one or more downstream cells may use an intercalation material having a higher porosity. The electrodes of one or more downstream cells may include a coating that is relatively more robust than the electrode materials to a relatively high concentration of ion(s).

**In** one or more embodiments, one or more recirculation loops may be utilized in the deionization devices. One or more downstream cells may have higher recycle ratios than one or more upstream cells. This configuration may reduce polarization of one or more relatively extreme-concentration streams via convective mixing while maintaining a given throughput in the purification and waste streams throughout the device.

A waste stream (e.g., a stream with an elevated salt concentration) may have a lower flow rate (e.g., a significantly lower flow rate) than a purification stream (e.g., a stream with a relatively low salt concentration) to increase a water recovery ratio (e.g., a volume of purified water divided by a volume of source water). At extremely high-water recovery ratios, the concentration of salt in the waste stream in the most downstream cell of the device can approach a precipitation limit somewhere between the membrane and the current collector due to concentration gradients, and any precipitation could lead to scaling of the membrane or electrode, thereby limiting its durability. In one or more embodiments, adding a recirculation system to one or more downstream waste streams is beneficial to increase convective mixing and reducing scaling.

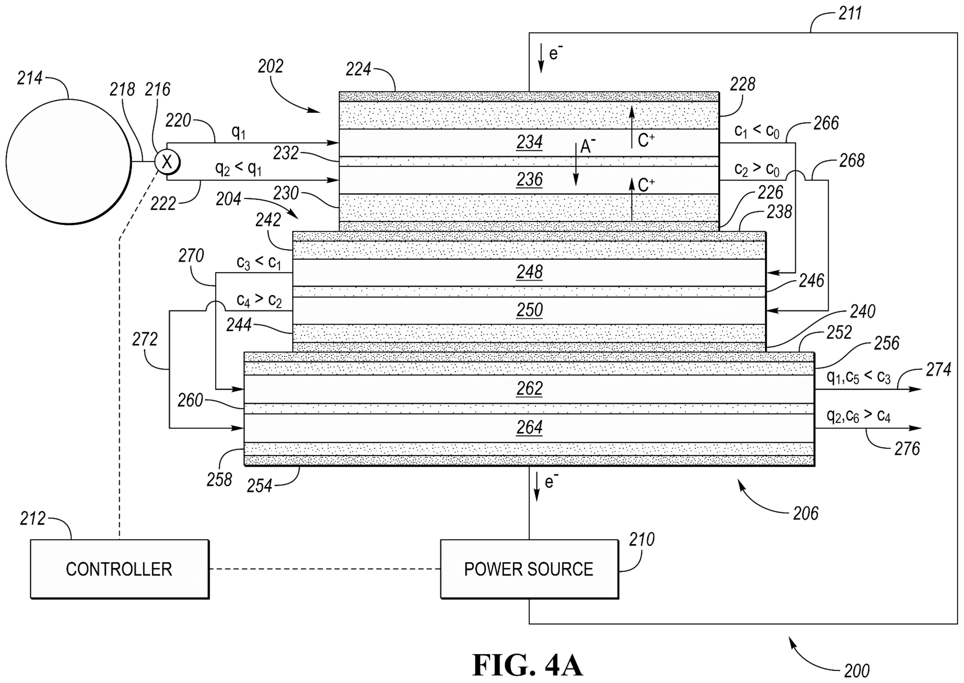

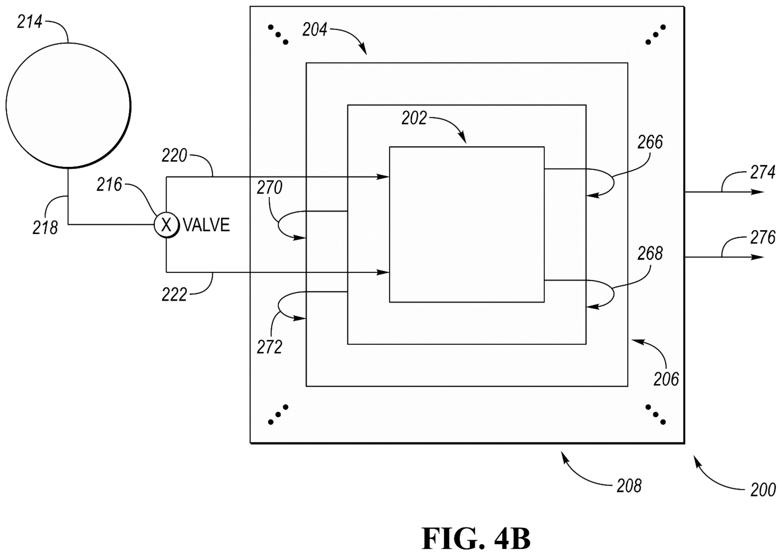

Figures 4A and 4B depict deionization system 200 including first cell 202, second cell 204, and third cell 206 in a cascading, stacked arrangement. Figure 4B further depicts fourth cell 208 of deionization system 200. Fourth cell 208 is also in a cascading, stacked arrangement with first, second, and third cells 202, 204, and 206. Power source 210 is configured to apply a bias (e.g., a current or voltage) through the stack of cells 202, 204, 206, and 208 via circuit 211. As shown in Figures 4A and 4B, the bias supplied by power source 210 creates a flow of electrons through circuit 211 and first, second, third, and fourth cells 202, 204, 206, and 208. Controller 212 may be configured to change the bias to reverse the flow of electrons through deionization system 200.

Source water 214 (e.g., brackish water or seawater or hard water) is fed into one or more valves 216 through inlet conduit 218. The concentration of target ion(s) (e.g., dissolved salts) in source water 214 is c₀. One or more valves 216 are configured to direct source water 214 into first and second conduits 220 and 222. Controller 212 may be configured to control the volumetric flow rate of the source water flowing through first and second conduits 220 and 222. In one embodiment, a purification stream of source water flows through first conduit 220 at a first volumetric flow rate of q₁ and a concentration stream of source water flows through second conduit 222 at a second volumetric flow rate of q₂. In one or more embodiments, q₂ < q₁ to increase water recovery. The purification and waste streams may be swapped. Controller 212 may be configured to swap the purification and waste streams by controlling one or more valves 216 such that q₁ < q₂ and by reversing the polarity of circuit 211 via power source 210, which is configured to be bidirectional. Power source 210 may include a circuit with variable resistors and switches to reverse the polarity. The power source or sink may include a battery configured to store and deliver energy to improve the overall energy efficiency of the system.

First cell 202 includes first and second end plates 224 and 226, first and second electrodes 228 and 230 adjacent to first and second end plates 224 and 226, respectively, anion exchange membrane 232, and first and second compartments 234 and 236 extending between anion exchange membrane 232 and first and second electrodes 228 and 230, respectively. First and second end plates 224 and 226 may be electronically conductive bipolar plates. First cell 202 and first and second electrodes 228 and 230 have a first area A₁. First and second electrodes 228 and 230 have a first thickness t₁. The purification stream of source water flows through first compartment 234 and the concentration stream of source water flows through second compartment 236. As depicted by the A⁻ arrow, anions flow from first compartment 234 across anion exchange membrane 232 into second compartment 236. As depicted by the C⁺ arrows, cations flow from second electrode 230 into second compartment 236 and from first compartment 234 into first electrode 228. The purification stream exiting first compartment 234 has a concentration of target ion(s) c₁ < c₀ and flows through third conduit 266 into first compartment 248 of second cell 204. The concentration stream exiting second compartment 236 has a concentration of target ion(s) c₂ > c₀ and flows through fourth conduit 268 into second compartment 250 of second cell 204.

Second cell 204 includes first and second end plates 238 and 240, first and second electrodes 242 and 244 adjacent to first and second end plates 238 and 240, respectively, anion exchange membrane 246, and first and second compartments 248 and 250 extending between anion exchange membrane 246 and first and second electrodes 242 and 244, respectively. First and second end plates 238 and 240 may be electronically conductive bipolar plates. Second cell 204 and first and second electrodes 242 and 244 have a second area A₂. First and second electrodes 242 and 244 have a second thickness t₂. The purification stream flows through first compartment 248 and exits into fifth conduit 270 at a concentration of target ion(s) of c₃ < c₁ and flows into first compartment 262 of third cell 206. The concentration stream flows through second compartment 250 and exits into sixth conduit 272 at a concentration of target ion(s) of c₄ > c₂ and flows into second compartment 264 of third cell 206. Adjacent end plates 236 and 238 may constitute a single bipolar plate with an area greater than or equal to A₂.

Third cell 206 includes first and second end plates 252 and 254, first and second electrodes 256 and 258 adjacent to first and second end plates 252 and 254, respectively, anion exchange membrane 260, and first and second compartments 262 and 264 extending between anion exchange membrane 260 and first and second electrodes 256 and 258, respectively. First and second end plates 252 and 254 may be electronically conductive bipolar plates. Third cell 206 and first and second electrodes 256 and 258 have a third area A₃. First and second electrodes 256 and 258 have a third thickness t₃. The purification stream flows through first compartment 262 and exits into seventh conduit 274 at a concentration of target ion(s) of c₅ < c₃ and exits deionization system 200 as purified water. The flow rate qi may be maintained through first compartment 234, third conduit 266, first compartment 248, fifth conduit 270, first compartment 262, and seventh conduit 274. The concentration stream flows through second compartment 264 and exits into eight conduit 276 at a concentration of target ion(s) of c₆ > c₄ and exits deionization system 200 as concentrated brine. The flow rate q₂ may be maintained through second compartment 236, fourth conduit 268, second compartment 250, sixth conduit 272, and second compartment 264. Adjacent end plates 240 and 252 may constitute a single bipolar plate with an area greater than or equal to A₃.

Fourth cell 208 shown in Figure 4B also includes first and second end plates, first and second electrodes adjacent to first and second end plates, respectively, an anion exchange membrane, and first and second compartments extending between anion exchange membrane and first and second electrodes, respectively. First and second end plates may be electronically conductive bipolar plates. Additional cells may be included between any pair of adjacent cells, above first cell 202 and/or below fourth cell 208. Fourth cell 208 and first and second electrodes of fourth cell 208 have a fourth area A₄. First and second electrodes of fourth cell 208 have a fourth thickness t₄. The cell receiving the influent streams may be referred to as an upstream cell. In one embodiment, all the downstream cells may be of successively larger area. In other embodiment, two or more cells have the same area, but the cells within the stack do not increase in area (i.e., the successive cells have the same area as one or more adjacent cells or the area of the cells increase downstream).

In one or more embodiments, A₃ > A₂ > A₁. The area may increase due to an increase in cell width (i.e., orthogonal to the compartments) and/or cell length (i.e., along the compartments). In one or more embodiments, only cell width is increased to reduce resistance of flow through cell, which may have the benefit of reducing mechanical energy consumption.

In one or more embodiments, t₃ < t₂ < t₁. In one such embodiment, the values of t₃, t₂, and t₁ are determined to maintain a constant capacity (i.e., A times t) for each of first, second, and third cell 202, 204, and 206 remains constant (i.e., A₁*t₁ = A₂*t₂ = A₃*t₃). While this fixed cell capacity embodiment may have one or more of the benefits set forth herein, in other embodiments the thickness may be maintained (e.g., t₃ = t₂ = t₁) for ease of manufacturing or for other reasons. In this fixed thickness example, the capacity of each subsequent cell 202, 204, and 206 would increase proportional to area. Thickness is one example of a parameter that can be varied to adjust an area-specific capacity (mAh/cm²) or an active material loading (mg/cm²), where these two quantities are related by an intrinsic material specific capacity (mAh/g). The volume faction of an active material may be increased or decreased to increase or decrease the area-specific capacity or the active material loading.

As shown in Figures 4A and 4B, the purified and concentrated streams exiting one cell enter the subsequent cell such that the concentration of target ion(s) in the purified stream is continuously decreasing, while that of the waste stream is continuously increasing. Although Figures 4A and 4B depict a co-flow arrangement within each cell, counterflow, and cross-flow arrangements may be implemented in one or more embodiments.

Figure 4B depicts a pyramidal cascade arrangement where both the length and width of each successive cell increases from an upstream position to a downstream position. The length and width of each cell may be the same but increases between successive cells (e.g., the first cell is 4 x 4 units, the second cell is 5 x 5 units, the third cell is 6 x 6 units, and the fourth cell is n x n units where n>6). In such an embodiment, the overall shape of the deionization system is square pyramidal. As shown in Figure 4B, each cell in the stack is centered on top of one another. In other embodiments, each cell may be offset from a center position to provide a geometry configured to better fit a space available depending on the application.

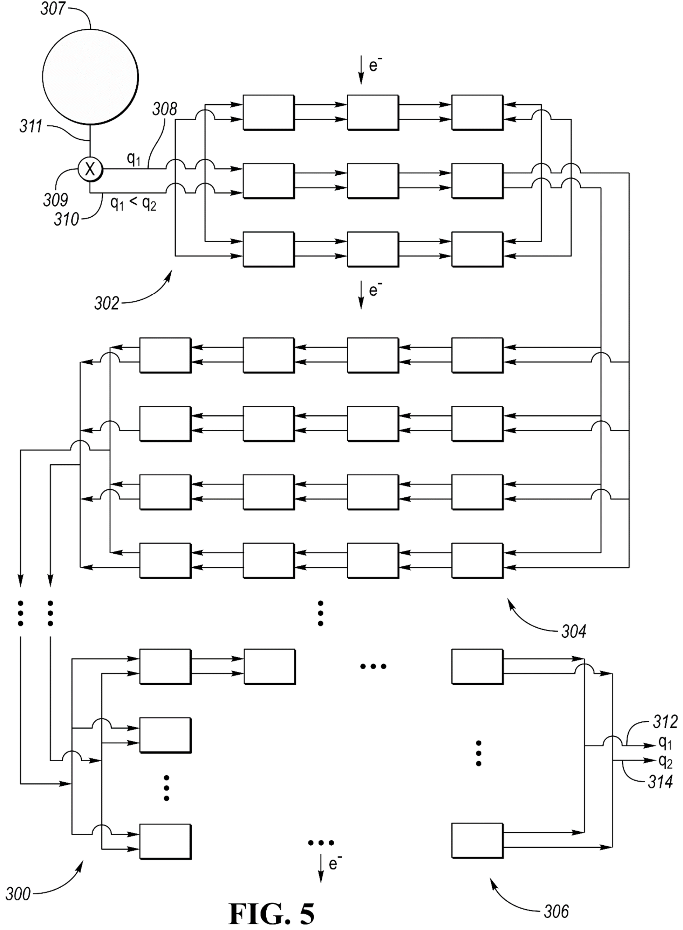

Figure 5 depicts deionization system 300 including first cell group 302, second cell group 304, and nth cell group 306. One or more cell groups may be positioned between second cell group 304 and nth cell group 306. Source water 307 (e.g., brackish water or seawater or hard water) is fed into one or more valves 309 through inlet conduit 311. One or more valves 309 are configured to direct source water 307 into first and second conduits 308 and 310. In one embodiment, a purification stream of source water flows through first conduit 308 at a first volumetric flow rate of q₁ and a concentration stream of source water flows through second conduit 310 at a second volumetric flow rate of q₂. In one or more embodiments, q₂ > q₁ to increase water recovery. The purification stream exits deionization system 300 through third conduit 312 as purified water at flow rate q₁. The concentration stream exits deionization system 300 through fourth conduit 314 as concentrated brine at flow rate q₂.

As shown in Figure 5, each of the cells of first cell group 302, second cell group 304, and nth cell group 306 have the same area or size while the number of cells increase from first cell group 302, second cell group 304, and nth cell group 306. The cells within each group are electrically connected in parallel, whereas the flow may be a combination of series and parallel connections or in a more complex manner. Making the cells of each group the same area and/or electrode thickness may reduce manufacturing costs. In such an embodiment, the most downstream cell group has a higher capacity that may be underutilized because switching frequency would be determined by the most upstream cell having the lowest capacity. In other embodiments, one or more cells in each group may have variation in one or more parameter (e.g., length, width, and/or electrode thickness). In one embodiment, the deionization system includes an upstream cell layer with a majority of cells with thick electrodes and a downstream layer where a majority of cells have thinner electrodes that are thinner than the thick electrodes.

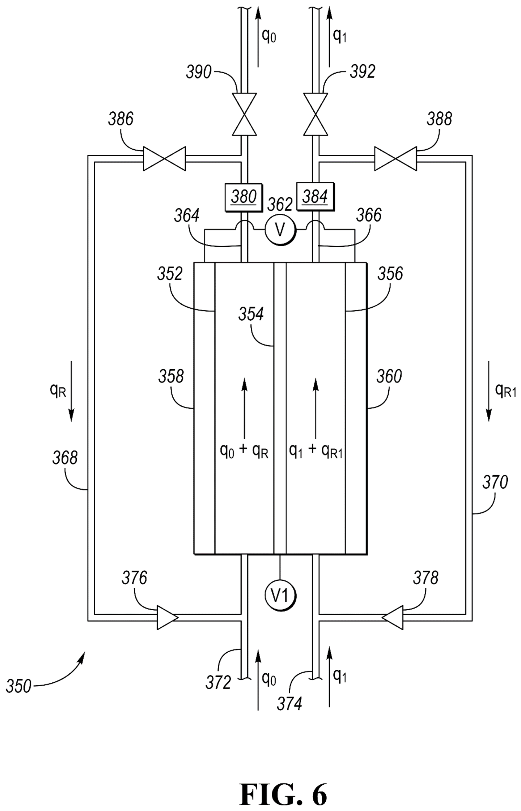

Figure 6 depicts a schematic diagram of deionization cell 350 having a recirculation loop. Deionization cell 350 includes first compartment 352 separated by anion exchange membrane 354 from second compartment 356. Each of first and second compartments 352 and 356 are configured to contain a saline water solution having a concentration of target ion(s) (e.g., dissolved salts) c₁ and having first and second intercalation host electrodes 358 and 360, respectively, arranged in fluid communication with the solution. Voltage source 362 is configured to supply electric current to first and second intercalation host electrodes 358 and 360 to release cations into solution from one of the electrodes and to remove cations from the solution and stored in the electrode on the other side. A controller (not shown) is configured to adjust an amount of electric current being supplied by voltage source to change the direction of anions present in the solution, thereby passing through anion exchange membrane 354 between first and second compartments 352 and 356 such that first and second compartments 352 and 356 alternately collect and disperse salt from the solution.

For example, first compartment 352 may release a purified water stream having a concentration c₁ < c₀ through outlet conduit 364 and second compartment 356 may release a brine solution stream with an increased concentration of target ion(s) c₂ > c₀ through outlet conduit 366. One or both of first and second compartments 352 and 356 may include a recirculation stream, for instance, first recirculation stream 368 and second recirculation stream 370, respectively. First recirculation stream 368 has a volumetric flow rate of q_{R} and second recirculation stream 370 has a volumetric flow rate of q_{R1}. Source water is fed into first compartment 352 through inlet conduit 372 and into second compartment 356 through inlet conduit 374. Source water enters inlet conduits 372 and 374 at volumetric flow rates of q₀ and q₁, respectively. First recirculation stream 368 includes valve 376 (e.g., one way valve) and second recirculation stream 370 includes valve 378 (e.g., one way valve). When valve 376 is open to inlet conduit 372, first recirculation stream 368 is combined with source water stream in inlet conduit 372, thereby changing the volumetric flow rate from q₀ to q₀ + q_{R}. When valve 378 is open to inlet conduit 374, second recirculation stream 370 is combined with source water stream in inlet conduit 374, thereby changing the volumetric flow rate from q₁ to q₁ + q_{R1}.

As shown in Figure 6, deionization cell 350 includes first controller 380 positioned within outlet conduit 364 and second controller 384 positioned within outlet conduit 366. In one or more embodiments, deionization cell 350 includes only one combined controller for both streams or a single controller that controls a single stream. First and/or second controller 380 and/or 384 may be configured to detect the volumetric flow rate of the stream flowing through outlet conduits 364 and/or 366, respectively. First and/or second controller 380 and/or 384 may be configured to detect one or more target ion concentrations of the stream flowing through outlet conduits 364 and/or 366, respectively. One or more of these detected values may be compared to an expected value of one or more of these values to determine a flow condition of the outflowing solution stream. For example, if a concentration of a brine stream is higher than an expected value based on flow rate and/or current density, an excessive parasitic reaction flow condition may exist.

First recirculation valve 386 is positioned within first recirculation stream 368 and second recirculation valve 388 is positioned within second recirculation stream 370. First outlet valve 390 is positioned within outlet conduit 364 and second outlet valve 392 is positioned within outlet conduit 366. First controller 380 may be configured to change an operating state of first recirculation valve 386. An operating state change of first recirculation valve 386 may increase or decrease the flow rate of the stream flowing through downstream first recirculation valve 386. First controller 380 may be configured to change an operating state of first outlet valve 390. An operating state change of first outlet valve 390 may increase or decrease the flow rate of the stream flowing through outlet conduit 364 downstream first outlet valve 390. Second controller 384 may be configured to change an operating state of second recirculation valve 388. An operating state change of second recirculation valve 388 may increase or decrease the flow rate of the stream flowing through downstream second recirculation valve 388. Second controller 384 may be configured to change an operating state of second outlet valve 392. An operating state change of second outlet valve 392 may increase or decrease the flow rate of the stream flowing through outlet conduit 366. First controller 380 may be configured to control the operating states of first outlet valve 390 and first recirculation valve 386 to control the flow of water in the first recirculation stream versus the first output stream. Second controller 384 may be configured to control the operating states of second outlet valve 392 and second recirculation valve 388. In one embodiment, first outlet valve 390 and first recirculation valve 386 may be combined into a variable three-way valve. Second outlet valve 392 and second recirculation valve 388 may be combined into a variable three-way valve. A one-way valve (e.g., a Tesla valve) may be employed to ensure the recirculation loop operates as intended and not as a bypass.

First and/or second controllers 380 and/or 384 may be configured to change an operating state of one or more valves in response to detecting a flow condition. For instance, second controller 384 may be configured to change an operating state of second recirculation valve 388 in response to an excessive parasitic reaction flow condition. The changed condition may increase the flow rate q_{R1} to induce convective mixing to decrease concentration gradients and to reduce the tendency for parasitic reactions.

While a co-flow arrangement is shown in Figure 6, other flow arrangements such as counter-flow, and cross-flow are contemplated. In one embodiment, an advantage of a counter-flow operation may be better resistance uniformity along channels, thereby producing better current density uniformity. This may be beneficial over a co-flow arrangement where resistance may increase downstream for both purification and concentration of water, which may result in a relatively higher current density upstream and a lower current density downstream.

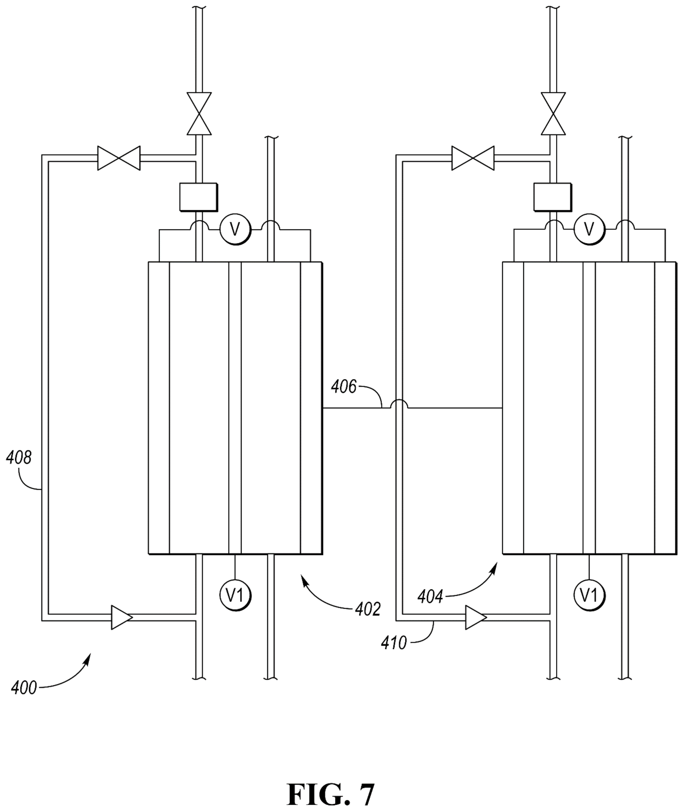

Figure 7 depicts a schematic diagram of deionization system 400 including first and second deionization cells 402 and 404 electrically connected through circuit 406. First and second deionization cells 402 and 404 may electrically connected in series or parallel through circuit 406. First deionization cell 402 includes first and second compartments separated by an anion exchange membrane and configured to contain a saline water solution having a concentration of target ion(s) (e.g., dissolved salts). Second deionization cell 404 includes first and second compartments separated by an anion exchange membrane and configured to contain a saline water solution having a concentration of target ion(s). First and second deionization cells 402 and 404 may be configured in series or parallel in terms of flow of water. First deionization cell 402 includes first and second intercalation host electrodes. Second deionization cell 404 includes first and second intercalation host electrodes. One of the first and second compartments of first deionization cell 402 includes recirculation loop 408. One of the first and second compartments of second deionization cell 404 includes recirculation loop 410. Recirculation loops 408 and 410 recycle a solution stream of first and second deionization cells 402 and 404, respectively, and do not recycle streams from the other deionization cell.

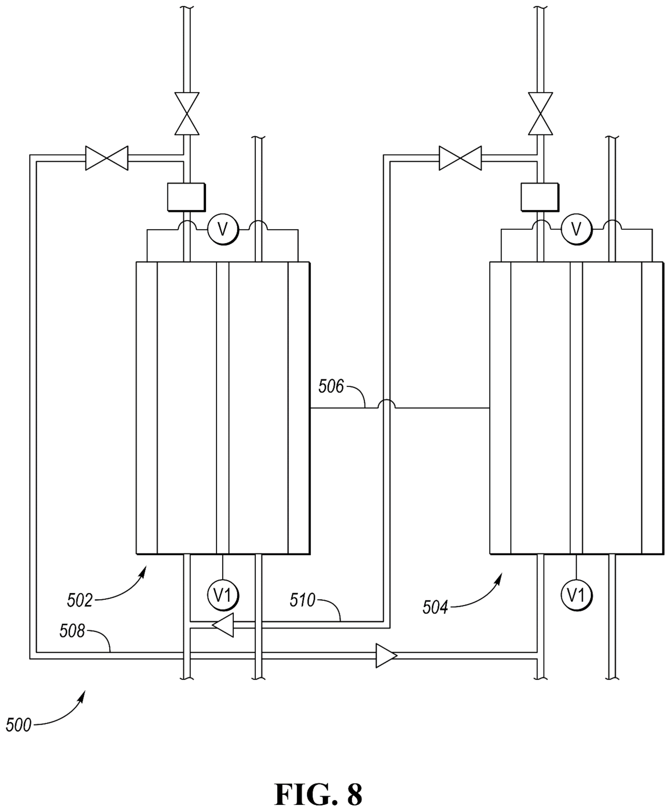

Figure 8 depicts a schematic diagram of deionization system 500 including first and second deionization cells 502 and 504 electrically connected through circuit 506. First and second deionization cells 502 and 504 may electrically connected in series or parallel through circuit 506. First deionization cell 502 includes first and second compartments separated by an anion exchange membrane and configured to contain a saline water solution having a concentration of target ion(s) (e.g., dissolved salts). Second deionization cell 504 includes first and second compartments separated by an anion exchange membrane and configured to contain a saline water solution having a concentration of target ion(s). First and second deionization cells 502 and 504 may be configured in series or parallel in terms of flow of water. First deionization cell 502 includes first and second intercalation host electrodes. Second deionization cell 504 includes first and second intercalation host electrodes. One of the first and second compartments of first deionization cell 502 includes recirculation loop 508. One of the first and second compartments of second deionization cell 504 includes recirculation loop 510. As shown in Figure 8, recirculation loop 508 combines with an input stream of second deionization cell 504 and recirculation loop 510 combines with an input stream of first deionization cell 502.

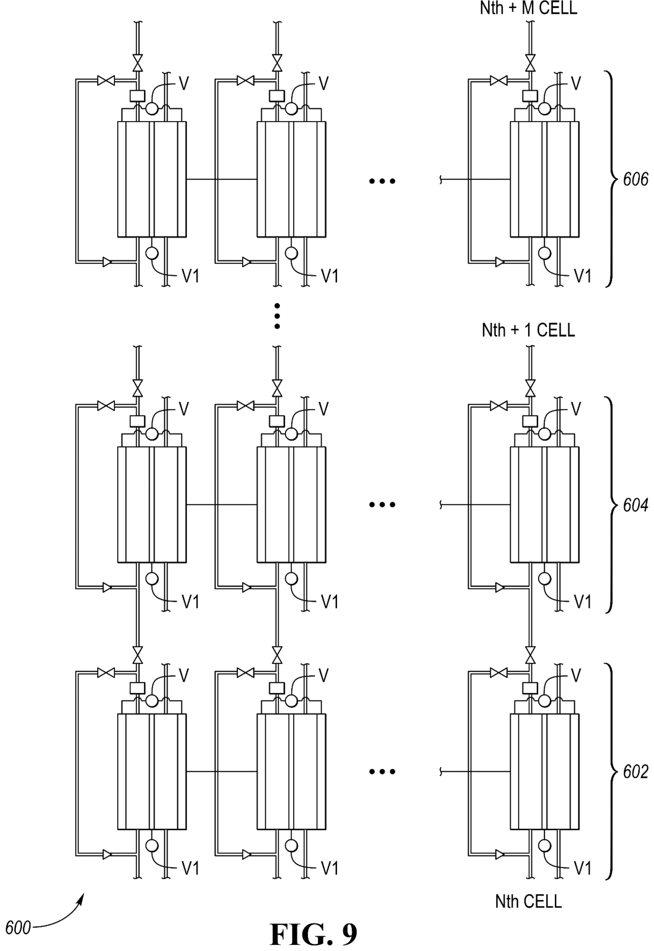

Figure 9 depicts a schematic diagram of deionization system 600 having a number of deionization cells arranged in a cascade such that a first row 602 of deionization cells including n number of cells, a second row 604 including at least n+1 number of cells, and a subsequent row 606 of deionization cells including at least one more cell than the preceding row of cells. Each of the deionization cells may have an independent, flow-controlled recirculation stream from an output stream, which combines with an input stream of the same deionization cells. An independent, flow-controlled recirculation stream may be included with each compartment of the deionization cell. In another embodiment, a recirculation stream of a first cell combines with an input stream of a second cell, a recirculation stream of a second cell combines with an input stream of a third cell, and this arrangement can continue with all cells within one or more rows. In another embodiment, one or more recirculation streams from cells from row n are combined with input streams of cells from rows n-1 and/or n+1. Cells in different rows may have different areas, electrode thicknesses, and/or electrode loadings depending on the implementation.

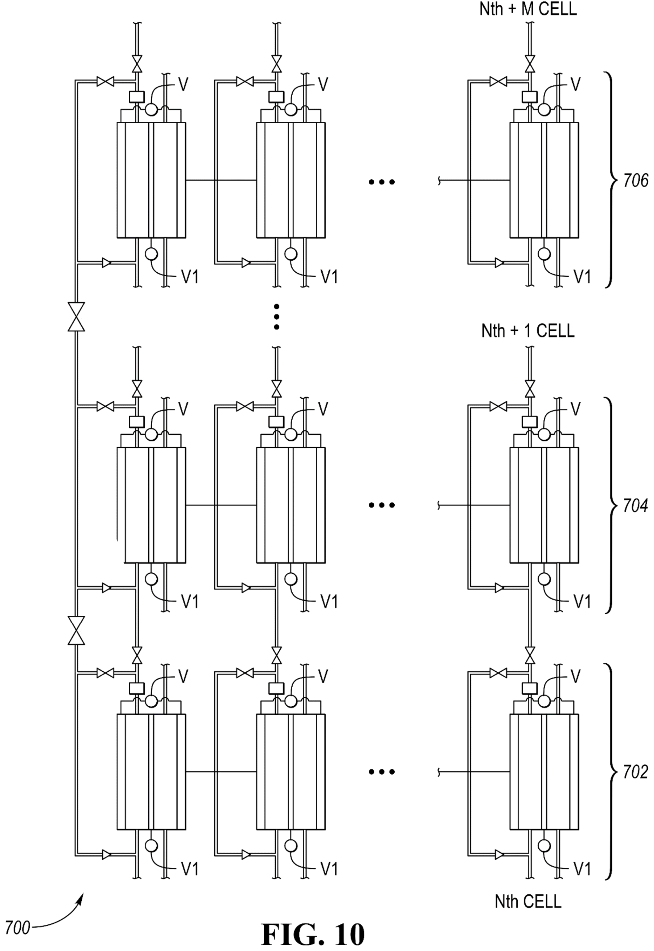

Figure 10 depicts a schematic diagram of deionization system 700 having a number of deionization cells arranged in a cascade such that a first row 702 of deionization cells including n number of cells, a second row 704 including at least n+1 number of cells, and a subsequent row 706 of deionization cells including at least one more cell than the preceding row of cells. In one embodiment, an independent or combined purified output stream of a row is an input stream for a subsequent purification stream. In this embodiment, the brine solution streams may be connected in parallel both to the water source and a brine collection stream or reservoir.

In one or more embodiments, when two recycle streams are employed in a deionization cell, the recycle streams may be symmetric to enable continuous operation where current is reversed to swap waste streams and purification streams.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

Further, the following embodiments are disclosed.

Embodiment 1: A system for removing ions from a solution is provided, the system comprising: a first deionization cell including first and second compartments divided by a first anion exchange membrane, the first and second compartments including first and second electrodes, respectively, the first compartment being configured to admit a first inlet stream of the solution and provide a first outlet stream of the solution, the second compartment being configured to admit a second inlet stream of the solution and provide a second outlet stream of the solution, and the first and second electrodes being configured to receive an electric bias of current or voltage through a circuit such that the first and second electrodes store and release ions from the solution; and a second deionization cell including first and second compartments divided by a second anion exchange membrane, the first and second compartments including first and second electrodes, respectively, the first compartment being configured to admit the first outlet stream of the solution and provide a third outlet stream of the solution, and the second compartment being configured to admit the second outlet stream of solution and provide a fourth outlet stream of the solution, and the first and second electrodes being configured to receive the electric bias of current or voltage through the circuit such that the first and second electrodes store and release ions from the solution, the first and second electrodes of the first deionization cell having a first cell area being configured to contact the solution and the first and second electrodes of the second deionization cell having a second cell area configured to contact the solution and different than the first cell area.

Embodiment 2: The system of embodiment 1, wherein the first and second electrodes of the first deionization cell have a first thickness, and the first and second electrodes of the second deionization cell having a second thickness less than or equal to than the first thickness.

Embodiment 3: The system of embodiment 2, wherein the first and second electrodes of the first deionization cell have a first capacity, and the first and second electrodes of the second deionization cell having a second capacity equal to the first capacity.

Embodiment 4: The system of embodiment 1, wherein the first and second electrodes of the first deionization cell having a first active material loading, and the first and second electrodes of the second deionization cell having a second active material loading higher than the first active material loading.

Embodiment 5: The system of embodiment 1, wherein the first and second deionization cells are stacked on each other, the first and second electrodes of the first deionization cell have a first profile, the first and second electrodes of the second deionization cell have a second profile, and the first and second profiles form a pyramidal structure.

Embodiment 6: The system of embodiment 1, further comprising a third deionization cell including first and second compartments divided by a third anion exchange membrane, the first and second compartments including first and second electrodes, respectively, the first compartment being configured to admit the third outlet stream of the solution and provide a fifth outlet stream of the solution, and the second compartment being configured to admit the fourth outlet stream of the solution and provide a sixth outlet stream of the solution, and the first and second electrodes being configured to receive the electric bias of current or voltage through the circuit such that the first and second electrodes store and release ions from the solution, the first and second electrodes of the third deionization cell having a third cell area being configured to contact the solution and greater than the first and second cell areas.

Embodiment 7: The system of embodiment 1, wherein the first and second electrodes of the first deionization cell having a first porosity, and the first and second electrodes of the second deionization cell having a second porosity higher than the first porosity.

Embodiment 8: A system for removing ions from a solution is provided, the system comprising: a first deionization cell group having a first number of deionization cells, the first deionization cell group being configured to admit first and second inlet streams of the solution and to provide first and second outlet streams of the solution; and a second deionization cell group having a second number of deionization cells, the second deionization cell group being configured to admit the first and second outlet streams of the solution and to provide third and fourth outlet streams of the solution, and the second number of deionization cells greater than the first number of deionization cells.

Embodiment 9: The system of embodiment 8, wherein the first number of desalination cells are connected in parallel.

Embodiment 10: The system of embodiment 8, wherein the first number of desalination cells include one or more cells with electrode pairs with a first thickness, and the second number of desalination cells include one or more cells with electrode pairs with a second thickness less than or equal to the first thickness.

Embodiment 11: The system of embodiment 8, wherein the first and second inlet streams are the only streams inlet into the first deionization cell group and the first and second outlet streams are the only streams outlet from the first deionization cell group into the second deionization cell group.

Embodiment 12: A system for removing ions from a solution is provided, the system comprising: a first deionization cell including first and second compartments divided by a first anion exchange membrane, the first and second compartments including first and second electrodes, respectively, the first compartment being configured to admit a first inlet stream of the solution and provide a first outlet stream of the solution, the second compartment being configured to admit a second inlet stream of the solution and provide a second outlet stream of the solution, the first and second electrodes being configured to receive an electric bias of current or voltage through a circuit such that the first and second electrodes store and release ions from the solution, and the first deionization cell including a first recirculation loop being configured to direct at least a portion of the first outlet stream into the first inlet stream.

Embodiment 13: The system of embodiment 12, wherein the first deionization cell includes a second recirculation loop configured to direct at least a portion of the second outlet stream into the second inlet stream.

Embodiment 14: The system of embodiment 12, further comprising: a second deionization cell including third and fourth compartments divided by a second anion exchange membrane, the third and fourth compartments including third and fourth electrodes, respectively, the third compartment configured to admit a third inlet stream of the solution and provide a third outlet stream of the solution, the fourth compartment configured to admit a fourth inlet stream of the solution and provide a fourth outlet stream of the solution, the third and fourth electrodes configured to receive an electric bias of current or voltage through the circuit such that the third and fourth electrodes store and release ions from the solution, the second deionization cell including a second recirculation loop, and the first and second deionization cells are electrically connected through the circuit.

Embodiment 15: The system of embodiment 14, wherein the second recirculation loop is configured to direct at least a portion of the third outlet stream into the third inlet stream.

Embodiment 16: The system of embodiment 14, wherein the second recirculation loop is configured to direct at least a portion of the third outlet stream into the first inlet stream of the first deionization cell.

Embodiment 17: The system of embodiment 12, wherein the first deionization cell includes a first recirculation valve configured to flow at least the portion of the first outlet stream into the first inlet stream.

Embodiment 18: The system of embodiment 17, wherein the first deionization cell includes a controller configured to detect a first solution value within the first outlet stream.

Embodiment 19: The system of embodiment 18, wherein the controller is configured to actuate the first recirculation valve in response to the first solution value.

Embodiment 20: The system of embodiment 18, wherein the first solution value is selected form the group consisting of: ion concentration or volumetric flow rate.

## Claims

1. A system for removing ions from a solution, the system comprising:
a first deionization cell including first and second compartments divided by a first anion exchange membrane, the first and second compartments including first and second electrodes, respectively, the first compartment being configured to admit a first inlet stream of the solution and provide a first outlet stream of the solution, the second compartment being configured to admit a second inlet stream of the solution and provide a second outlet stream of the solution, and the first and second electrodes being configured to receive an electric bias of current or voltage through a circuit such that the first and second electrodes store and release ions from the solution; and
a second deionization cell including first and second compartments divided by a second anion exchange membrane, the first and second compartments including first and second electrodes, respectively, the first compartment being configured to admit the first outlet stream of the solution and provide a third outlet stream of the solution, and the second compartment being configured to admit the second outlet stream of solution and provide a fourth outlet stream of the solution, and the first and second electrodes being configured to receive the electric bias of current or voltage through the circuit such that the first and second electrodes store and release ions from the solution,
the first and second electrodes of the first deionization cell having a first cell area being configured to contact the solution and the first and second electrodes of the second deionization cell having a second cell area configured to contact the solution and different than the first cell area.

2. The system of claim 1, wherein the first and second electrodes of the first deionization cell have a first thickness, and the first and second electrodes of the second deionization cell having a second thickness less than or equal to than the first thickness.

3. The system of claim 2, wherein the first and second electrodes of the first deionization cell have a first capacity, and the first and second electrodes of the second deionization cell having a second capacity equal to the first capacity.

4. The system of claim 1, wherein the first and second electrodes of the first deionization cell having a first active material loading, and the first and second electrodes of the second deionization cell having a second active material loading higher than the first active material loading.

5. The system of claim 1, wherein the first and second deionization cells are stacked on each other, the first and second electrodes of the first deionization cell have a first profile, the first and second electrodes of the second deionization cell have a second profile, and the first and second profiles form a pyramidal structure.

6. The system of claim 1, further comprising a third deionization cell including first and second compartments divided by a third anion exchange membrane, the first and second compartments including first and second electrodes, respectively, the first compartment being configured to admit the third outlet stream of the solution and provide a fifth outlet stream of the solution, and the second compartment being configured to admit the fourth outlet stream of the solution and provide a sixth outlet stream of the solution, and the first and second electrodes being configured to receive the electric bias of current or voltage through the circuit such that the first and second electrodes store and release ions from the solution,
the first and second electrodes of the third deionization cell having a third cell area being configured to contact the solution and greater than the first and second cell areas.

7. The system of claim 1, wherein the first and second electrodes of the first deionization cell having a first porosity, and the first and second electrodes of the second deionization cell having a second porosity higher than the first porosity.
